# FASCICULE DE BREVET EUROPEEN

(11) **EP 1 607 158 B1**
(45) Date de publication et mention de la délivrance du brevet: **20.01.2010**
(21) Numéro de dépôt: 05291251.6
(22) Date de dépôt: 10.06.2005
(51) Int. Cl.: B22F 5/04, F01D 25/26

(54) **Procédé de fabrication d'un carter de stator de turbine**
Verfahren zur Herstellung eines Stators eines Turbinengehäuses
Process for preparing a turbine stator casing

(30) Priorité: 15.06.2004 FR 0406469
(43) Date de publication de la demande: 21.12.2005
(73) Titulaire: SNECMA, 75015 Paris (FR)
(72) Inventeur: Imbourg, Sébastien, 91330 Yerres (FR); Mons, Claude, 77176 Savigny le Temple (FR); Pabion, Philippe, 77000 Vaux le Penil (FR); Soupizon, Jean-Luc, 77000 Vaux le Penil (FR)
(74) Mandataire: Barbin le Bourhis, Joël

(56) Documents cités:
- EP-A1- 1 288 444
- US-A- 4 383 854
- R.BACCINO ET AL: "High performance and high complexity net shape parts for gas turbines: the ISOPREC powder metallurgy process" MATERIALS AND DESIGN, vol. 21, 2000, pages 345-350, XP008044948

## Description

L'invention concerne un procédé de fabrication d'un carter de stator de turbine, et plus particulièrement de turbine de turboréacteur d'avion.

Un tel carter comprend une enveloppe de forme générale tronconique qui porte sur sa face interne, tournée vers l'intérieur de la turbine, des crochets de fixation servant à soutenir un ou plusieurs distributeurs de turbine formés par des anneaux ou des segments d'anneau porteurs d'aubes fixes. Entre ces distributeurs, on trouve des roues mobiles qui portent les aubes mobiles du rotor de la turbine. Le couple formé par un distributeur et une roue mobile constitue un étage de turbines.

Les turbines, et plus particulièrement les turbines de turboréacteur d'avion, sont traversées par des gaz de combustion très chauds dont les températures peuvent parfois atteindre, pour certains étages de la turbine, 1100°C. Aussi, l'enveloppe du carter est soumise à un échauffement très important et il est nécessaire de refroidir cette dernière à l'aide d'un système de refroidissement.

La demande de brevet européen publiée sous le numéro EP 1 288 444 A1 donne un exemple de système de refroidissement formé de rampes annulaires perforées, alimentées en air frais, qui entourent l'enveloppe. L'air frais est soufflé sur la face externe de l'enveloppe, à travers les perforations des rampes. Toutefois, dans la pratique, on a pu constater qu'un tel système de refroidissement nécessitait des équipements volumineux et coûteux et ne permettait pas de réduire significativement l'échauffement de l'enveloppe au niveau de sa face interne.

Pour réduire l'encombrement des systèmes de refroidissement à rampes et améliorer le refroidissement de la face interne de l'enveloppe, on a conçu des enveloppes double-paroi ou double-peau qui présentent entre leurs peaux intérieure et extérieure des espaces libres dans lesquels on fait circuler de l'air frais. Pour réaliser de telles enveloppes, on a recours à des techniques de fonderie classiques utilisant des noyaux solubles. Plus précisément, on coule un alliage fondu dans un moule dont les parois ont la forme des contours de l'enveloppe, les noyaux solubles étant fixés à ce moule. Une fois l'alliage refroidi et solidifié, on extrait l'enveloppe du moule et on la plonge dans un bain de dissolution basique de sorte que les noyaux se dissolvent en laissant apparaître à leur place lesdits espaces libres.

Ce mode de réalisation présente néanmoins certains inconvénients liés à la nature même de l'élaboration par coulée. Ainsi, la précision dimensionnelle de l'enveloppe moulée est difficile à contrôler. De plus, les propriétés mécaniques comme la limite d'élasticité et la tenue à la fatigue de l'enveloppe formée ne sont pas optimales, souvent en raison de la forte porosité de cette dernière ou de la présence dans sa masse de défauts de structure qui la fragilisent (ces défauts sont souvent liés au refroidissement non uniforme de la pièce moulée).

L'invention est relative à un procédé de fabrication de carter de stator de turbine qui permet de réaliser des enveloppes de carter double-peau avec une bonne précision dimensionnelle, ces enveloppes présentant, en outre, de bonnes propriétés mécaniques.

Sous sa forme la plus générale, l'invention concerne un procédé de fabrication d'un carter de stator de turbine selon la revendication 1. ledit carter comprenant une enveloppe. Ce procédé comprend les opérations consistant à :
- ménager entre les parois des parties d'un moule formé d'au moins deux parties, une cavité de forme correspondant à celle de ladite enveloppe;
- solidariser des noyaux réalisés en un matériau soluble, à l'une desdites parties de moule, au moins, ces noyaux étant maintenus à distance de la paroi de ladite partie et matérialisant des espaces libres que l'on souhaite ménager à l'intérieur de ladite enveloppe ;
- remplir ladite cavité avec une poudre d'un alliage métallique ;
- fritter cette poudre par compression isostatique à chaud ;
- éliminer lesdits noyaux par dissolution ; et
- extraire l'enveloppe ainsi moulée.

Lesdits espaces libres servent bien entendu à créer des chemins de circulation d'air frais dans l'épaisseur de l'enveloppe.

Le fait de réaliser l'enveloppe par compression isostatique à chaud (C.I.C.) d'une poudre métallique, permet d'obtenir directement une pièce aux cotes souhaitées avec une grande précision.

D'autre part, en comparant les propriétés mécaniques d'un premier type d'enveloppe double-peau réalisé selon le procédé de l'invention avec un deuxième type d'enveloppe double-peau réalisé par fonderie à noyau soluble, la société demanderesse a pu constater que les enveloppes du premier type présentaient en moyenne une limite d'élasticité et une tenue à la fatigue respectivement supérieure de 30 et de 50 % à celles du deuxième type.

Pour ces tests comparatifs, les enveloppes réalisées selon le procédé de l'invention l'ont été à partir d'une poudre d'alliage métallique connu sous la marque Astroloy®, tandis que les autres enveloppes ont été réalisées à partir d'un alliage utilisé en fonderie connu sous la marque Inconel 718®.

Selon un mode particulier de mise en oeuvre du procédé de l'invention, on met en place, entre les noyaux, des inserts matérialisant des chemins de circulation entre lesdits espaces libres ; et on élimine ces inserts après l'opération de frittage.

Ces inserts permettent de connecter entre eux les chemins de circulation d'air ménagés par la dissolution des noyaux, ce qui favorise la circulation de l'air frais et donc le refroidissement de l'enveloppe.

Pour éliminer ces inserts, on peut les extraire ou les percer à l'aide d'un outillage à renvoi. Il est également possible de les éliminer par électroérosion (i.e. de dissoudre ces noyaux à l'aide d'un courant électrique généré par une électrode). Enfin, on peut réaliser ces inserts en un matériau soluble et dissoudre ces derniers dans un solvant comme l'acide nitrique.

Les caractéristiques et les avantages du procédé de l'invention seront mieux compris à la lecture de la description détaillée qui suit, d'un exemple de mise en oeuvre du procédé. Cette description détaillée fait référence aux figures suivantes :
- la figure 1 est une coupe axiale partielle d'un exemple d'outillage utilisé pour mettre en oeuvre le procédé de l'invention ;
- la figure 2 est une vue en perspective partielle d'un carter de stator de turbine obtenu selon le procédé de l'invention ;
- la figure 3 est une coupe axiale partielle d'une turbine équipée du carter de la figure 2.

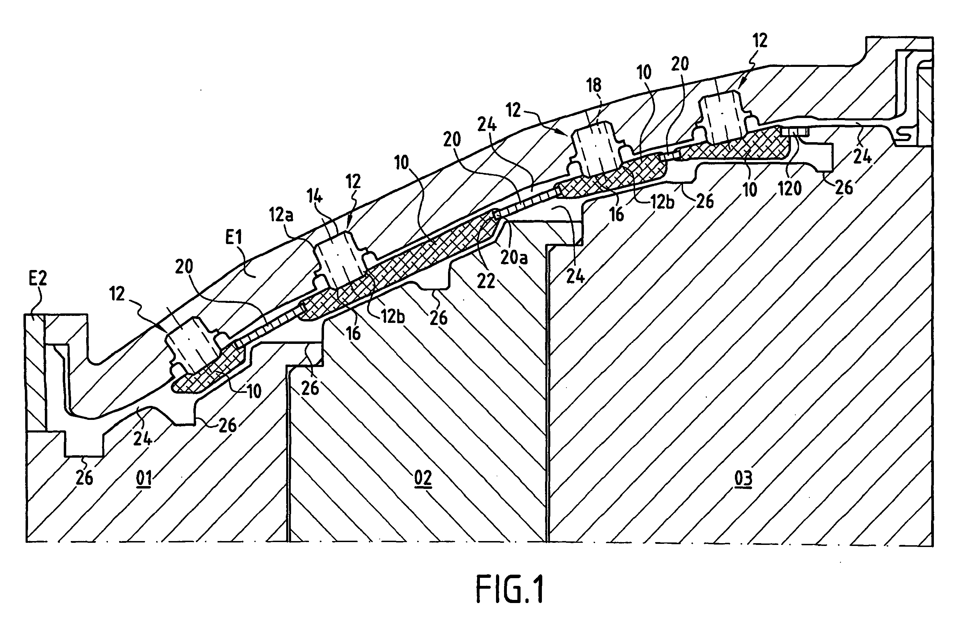

L'outillage représenté sur la figure 1 comprend un moule en plusieurs parties. Cinq de ces parties sont représentées : trois parties intérieures O1, O2 et O3 et deux parties extérieures E1 et E2. La conception de ces parties de moule est très rigoureuse. Cette conception est assistée par ordinateur et prend en compte les retraits locaux intervenant lors de la compression isostatique à chaud ou C.I.C. Cette technique particulière de C.I.C, plus connue sous la dénomination « procédé Isoprec^{®}» (marque déposée), permet d'obtenir une enveloppe de carter directement aux cotes et de limiter ainsi son usinage ultérieur.

La publication scientifique "High performance and high complexity net shape parts for gas turbines: the ISOPREC powder metallurgy process" MATERIALS AND DESIGN, vol. 21, 2000 pages 345-350 est relative au procédé Isoprec®.

Des noyaux 10, réalisés en un matériau soluble dans un solvant particulier, sont solidarisés à la partie de moule extérieure E1 par des pions tubulaires 12. Ces pions 12 maintiennent ces noyaux 10 en position, à la place des espaces libres 110 de circulation d'air frais que l'on souhaite ménager dans l'épaisseur de l'enveloppe 105.

Chaque noyau 10 se présente soit sous la forme d'un anneau, soit sous la forme d'un segment d'anneau (chaque segment étant susceptible d'être mis bout à bout avec d'autres segments pour former un anneau complet).

Chaque pion 12 présente deux extrémités 12a et 12b, l'une des extrémités 12a est montée dans un premier logement 14, ménagé dans la partie de moule E1, et l'autre extrémité 12b est montée dans un deuxième logement 16 ménagé dans un desdits noyaux 10.

Comme ces pions 12 sont tubulaires, ils présentent un trou traversant 18 qui débouche au niveau des extrémités 12a et 12b. Ces trous 18 constituent des voles d'accès aux noyaux 10 par lesquelles passe le solvant utilisé pour dissoudre ces derniers.

Certains pions tubulaires 12 peuvent également présenter un filetage intérieur ou extérieur. Ce filetage est susceptible d'être utilisé pour fixer auxdits pions des outils pouvant servir à leur mise en place, ou une conduite d'alimentation en air de refroidissement.

L'outillage représenté sur la figure 1 comprend, en outre, des inserts 20 disposés entre les noyaux 10 et réalisés dans le même matériau soluble que ces derniers. Pour pouvoir rester en position, les inserts 20 sont fixés aux noyaux 10, par tout moyen de fixation approprié. Dans l'exemple représenté, des logements 22, susceptibles de recevoir les extrémités 20a des inserts 20, sont ménagés au niveau des bords des noyaux 10, de sorte que les inserts 20 peuvent être emboîtés dans ces noyaux 10.

Une fois que les noyaux 10 et les inserts 20 sont montés sur la partie de moule extérieure E1, on assemble l'ensemble des parties de moule de manière à ménager entre elles une cavité de forme correspondante à celle de l'enveloppe 105. Par forme correspondante, on entend une forme qui reproduit par excès la forme de la pièce souhaitée, tant pour tenir compte du retrait lors de la C.I.C. que pour réserver, si besoin, des épaisseurs destinées à être usinées par la suite. On remplit ensuite ladite cavité avec une poudre d'un alliage métallique 24. Cette poudre vient alors envelopper les noyaux 10 et les inserts 20. Les grains de poudre 24 situés entre les noyaux 10 ou les inserts 20 et les parties de moule extérieures E1 vont ainsi former la peau extérieure 105a de l'enveloppe 105, tandis que les grains de poudre 24 situés entre les noyaux 10 ou les inserts 20 et les parties de moule intérieures O1, O2, O3, vont former la peau intérieure 105b de l'enveloppe 105.

Pour fritter la poudre 24 par C.I.C, on dispose les parties de moule intérieures autour d'un cylindre d'appui, non représenté, et on passe autour des parties de moule extérieures une bague de serrage. L'ensemble ainsi formé est placé dans un autoclave sous une pression élevée à température élevée, par exemple 1000 bar et 1200°C. Comme il existe un léger jeu entre les parties du moule, ce dernier va se déformer de manière à comprimer la poudre 24. Sous l'effet cumulé de la compression et des hautes températures, cette poudre va se densifier pour former l'enveloppe 105, c'est l'étape de frittage.

En outre, il est possible de profiter du cycle de C.I.C. pour solidariser les pions 12 à l'enveloppe 105. On choisit alors les pions 12 et la poudre d'alliage métallique 24 dans des alliages de compositions compatibles pour pouvoir être soudées par soudage-diffusion. De manière connue en soi, le soudage-diffusion est un procédé qui consiste à maintenir des pièces en contact, ici l'enveloppe 105 (ou la poudre 24) et les pions 12, sous une pression et une température données pendant un temps contrôlé. Ici, les bonnes conditions de température et de pression sont atteintes durant le cycle de C.I.C. Les déformations plastiques créées à la surface des pièces permettent un contact intime ainsi qu'une migration, ou diffusion, des éléments entre les pièces, pour autant que ces dernières soient réalisées dans des alliages compatibles.

Comme exemples d'alliages compatibles, on peut utiliser, pour la poudre 24, de alliages adaptés au domaine de l'aéronautique et connus sous les marques Waspaloy®, Astroloy® ou Inconel 718®, et pour les pions 12 des alliages de base nickel ou de base cobalt.

Une fois le cycle de C.I.C. terminé, on détruit le moule, réalisé en acier doux, d'abord par usinage et ensuite en le plongeant dans un bain d'acide nitrique qui va le dissoudre. L'acide nitrique est en effet un bon solvant de l'acier doux et présente l'avantage de ne pas endommager les alliages précités, utilisés pour réaliser l'enveloppe 105 ou les pions 12.

Les noyaux 10 et les inserts 20 sont également réalisés en un matériau soluble dans l'acide nitrique, comme l'acier doux, de sorte qu'on utilise le même solvant que celui utilisé pour dissoudre le moule et que ces différentes dissolutions vont avoir lieu lors d'une même opération. L'acide va passer par les trous traversant 18 des pions tubulaires 12 pour atteindre d'abord les noyaux 10 et ensuite les inserts 20. La dissolution des noyaux 10 a pour conséquence la formation d'espaces libres 110 et la dissolution des inserts 20 a pour conséquence la formation de chemins de circulation 120 reliant entre eux lesdits espaces libres 110. On notera que le chemin emprunté par l'acide est le même que celui qui sera emprunté par l'air de refroidissement.

Comme expliqué plus haut, le carter réalisé est destiné à soutenir un ou plusieurs distributeurs de turbine au moyen de crochets de fixation répartis sur la face interne du carter, tournée vers l'intérieur de la turbine (c'est-à-dire sur la peau intérieur de l'enveloppe). Ces crochets peuvent être réalisés de différentes manières. Dans l'exemple représenté, on a moulé l'enveloppe 105 de manière à ménager sur sa face interne des projections ayant la forme générale 26 des crochets et on a usiné ensuite ces projections pour leurs donner la forme « finale » 126 des crochets.

Selon un autre exemple de mise en oeuvre du dispositif, les crochets de fixation peuvent être fabriqués préalablement au moulage de l'enveloppe, par fonderie par exemple, et ensuite fixés sur la face interne du carter par toute technique d'assemblage appropriée. Cette solution peut se révéler intéressante dans le cas où on envisage de réaliser les crochets dans un matériau plus réfractaire que l'enveloppe afin qu'ils résistent mieux aux fortes températures. Si des techniques d'assemblage comme le frettage, le soudage conventionnel ou le boulonnage sont envisageables, elles peuvent présenter, dans certains cas, des inconvénients. Ainsi, le soudage conventionnel par fusion favorise parfois la fissuration à chaud dans la zone fondue et l'apparition de criques au niveau de la zone affectée thermiquement par le soudage. Le boulonnage, quant à lui, complique la structure du carter en augmentant le nombre de pièces qui le constitue. Et, de manière générale, tous ces moyens d'assemblage peuvent présenter une résistance à la fatigue insuffisante compte tenu des conditions d'utilisation de la turbine.

Pour palier à ces inconvénients, on peut fabriquer les crochets dans un matériau compatible du point de vue du soudage-diffusion, avec le matériau de l'enveloppe (c'est-à-dire avec la poudre d'alliage métallique 24 choisie). Ainsi, lors du frittage de la poudre 24, on peut solidariser les crochets à l'enveloppe 105 par soudage-diffusion, de la même manière que les pions 12.

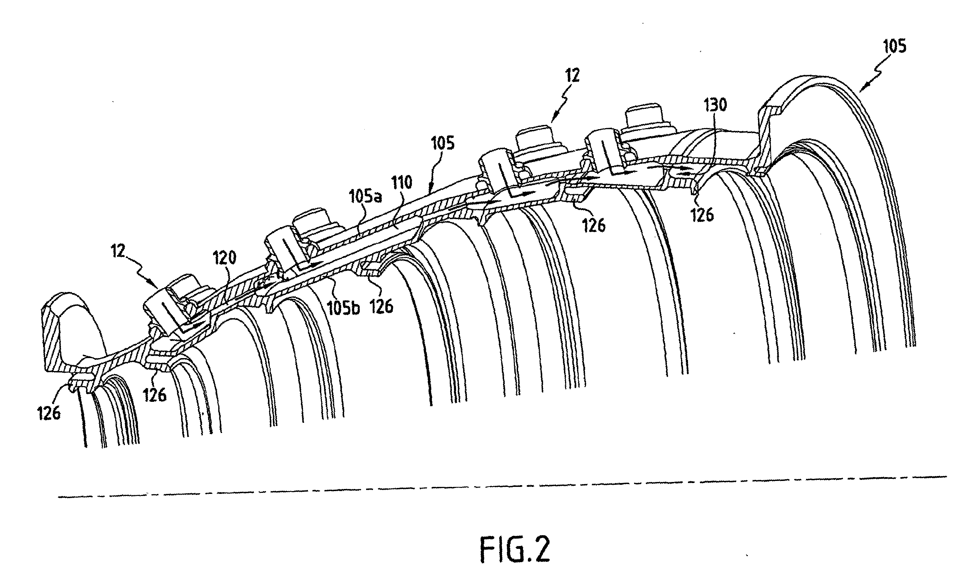

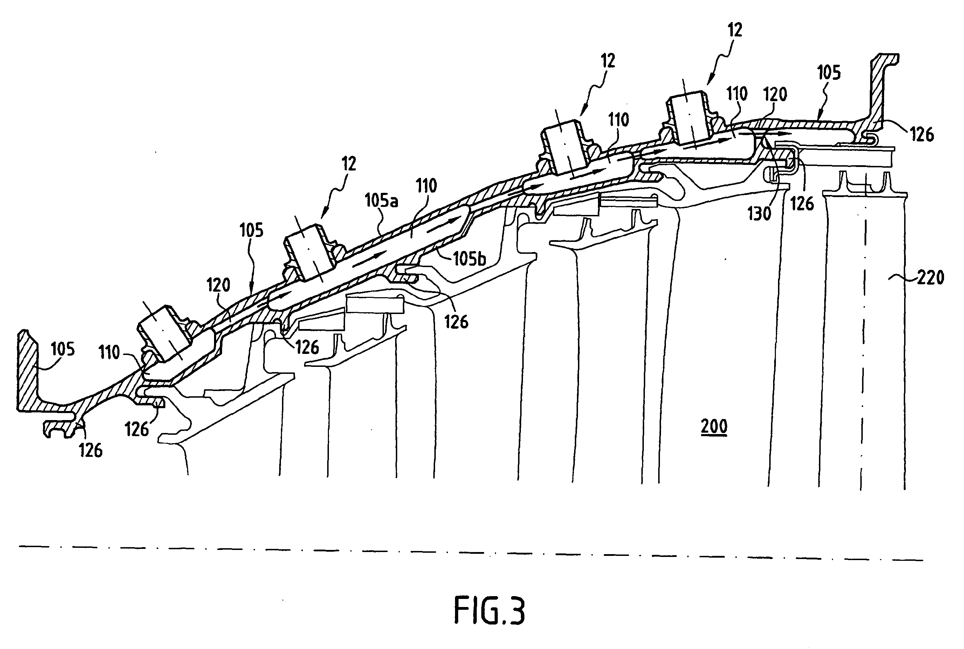

Les figures 2 et 3 représentent un carter de stator de turbine obtenu selon le procédé de l'invention. Ce carter soutient par le biais de ses crochets de fixation les aubes fixes 200 du distributeur de la turbine. Entre ces aubes fixes 200, se situent les aubes mobiles 220 du rotor de la turbine.

Sur la face extérieure du carter, la première extrémité 12a des pions 12 fait saillie, de sorte que ces pions 12 forment des bossages susceptibles de servir de points de fixation pour divers accessoires extérieurs au carter. En outre, la première extrémité 12a d'au moins un desdits pions 12 est susceptible de coopérer, par exemple par vissage, avec l'extrémité d'une conduite d'alimentation en air de refroidissement, non représentée sur les figures.

Dans les conditions de fonctionnement de la turbine, l'enveloppe 105 du carter est refroidie par la circulation d'air frais à l'intérieur des espaces libres 110 et des chemins de circulation 120 ménagés entre ces espaces libres 110.

Dans le cas d'un turboréacteur d'avion, l'air frais est prélevé généralement au niveau du compresseur haute pression ou du carter intermédiaire et amené jusqu'au carter de stator par au moins une conduite d'alimentation d'air. Cet air frais s'écoule ensuite entre les peaux 105a, 105b de l'enveloppe 105, de l'avant vers l'arrière, selon les flèches représentées sur les figures 2 et 3. Il est nécessaire de prévoir au moins une entrée d'air à l'avant du carter et une sortie d'air 130 à l'arrière.

Dans l'exemple représenté, tous les pions 12 sont destinés à être reliés à une conduite d'alimentation d'air frais de sorte que plusieurs entrées d'air sont réparties le long de l'enveloppe 105. Ces entrées permettent d'injecter la quantité d'air frais nécessaire au bon refroidissement de l'enveloppe 105 et leur répartition est faite de manière à garantir l'écoulement de l'air vers la sortie 130. La sortie 130 est formée par un chemin de circulation d'air 120 qui débouche à l'extérieur de l'enveloppe 105.

En résumé, le procédé de fabrication de l'invention permet de réaliser un carter de stator de turbine de forme complexe, mais de structure simple, qui présente de bonnes propriétés mécaniques et qui, lors du fonctionnement de la turbine, va pouvoir être refroidi efficacement.

## Revendications

1. Procédé de fabrication d'un carter de stator de turbine, ledit carter comprenant une enveloppe (105) double-peau avec une peau intérieure, une peau extérieure et des espaces libres (110) entre ces peaux intérieure et extérieure, ce procédé comprenant les opérations consistant à :
- ménager entre les parois des parties (O1, O2, O3, E1, E2) d'un moule formé d'au moins deux parties, une cavité de forme correspondant à celle de ladite enveloppe (105);
- solidariser des noyaux (10), réalisés en un matériau soluble, à au moins une desdites parties de moule (E1) en utilisant des pions tubulaires (12), ces noyaux étant maintenus à distance de la paroi de ladite partie de moule par lesdits pions (12) et matérialisant lesdits espaces libres (110) que l'on souhaite ménager à l'intérieur de ladite enveloppe (105), chaque pion (12) ayant deux extrémités (12a, 12b), une extrémité (12b) étant montée dans un logement (16) ménagé dans un desdits noyaux (10) et l'autre extrémité (12a) étant montée dans un logement (14) ménagé dans ladite partie de moule (E1), et chaque pion (12) présentant un trou traversant (18) qui débouche au niveau desdites extrémités (12a, 12b),
- remplir ladite cavité avec une poudre d'un alliage métallique (24) ;
- fritter cette poudre (24) par compression isostatique à chaud ;
- éliminer lesdits noyaux (10) en utilisant un solvant pour les dissoudre, lesdits trous traversant (18) constituant des voies d'accès aux noyaux par lesquelles passe le solvant ; et
- extraire l'enveloppe (105) ainsi moulée.

2. Procédé selon la revendication 1, comprenant les opérations consistant à :
- mettre en place, entre les noyaux (10), des inserts (20) matérialisant des chemins de circulation (120) entre lesdits espaces libres (110); et
- éliminer ces inserts (20) après l'opération de frittage.

3. Procédé selon la revendication 2, dans lequel on réalise lesdits inserts (20) en un matériau soluble et on élimine ces inserts (20) par dissolution.

4. Procédé selon l'une quelconque des revendications 1 à 3, dans lequel ladite autre extrémité (12a) d'au moins un desdits pions (12) est susceptible de coopérer avec l'extrémité d'une conduite d'alimentation en air de refroidissement.

5. Procédé selon l'une quelconque des revendications 1 à 4, dans lequel on solidarise les pions (12) à l'enveloppe (105) par soudage-diffusion, lors du frittage de la poudre, les matériaux des pions (12) et de l'enveloppe (105) étant compatibles du point de vue du soudage-diffusion.

6. Procédé selon l'une quelconque des revendications 1 à 5, dans lequel ledit carter comprend, en outre, des crochets de fixation pour soutenir au moins un distributeur de turbine, et dans lequel on moule l'enveloppe (105) de manière à ménager sur la face interne de l'enveloppe, tournée vers l'intérieur de la turbine, des projections, et on usine ces projections pour leur donner la forme (126) desdits crochets.

7. Procédé selon l'une quelconque des revendications 1 à 5, dans lequel ledit carter comprend, en outre, des crochets de fixation pour soutenir au moins un distributeur de turbine, et dans lequel on fabrique ces crochets préalablement au moulage de l'enveloppe (105) et on les fixe ensuite sur la face interne de l'enveloppe, tournée vers l'intérieur du carter.

8. Procédé selon la revendication 7, dans lequel on solidarise les crochets à l'enveloppe (105) par soudage-diffusion, lors du frittage de la poudre (24), les matériaux des crochets et de l'enveloppe (105) étant compatibles du point de vue du soudage-diffusion.

9. Procédé selon l'une quelconque des revendications 1 à 8, dans lequel on réalise les parties de moule (O1, O2, O3, E1, E2) en matériau soluble et on élimine ces parties de moule par dissolution.

10. Procédé selon l'une quelconque des revendications 1 à 9, dans lequel on choisit ledit matériau soluble en acier doux et on utilise de l'acide nitrique comme solvant.

11. Procédé selon l'une quelconque des revendications 1 à 10, dans lequel les noyaux (10) et les éventuels inserts (20) sont réalisés en un matériau soluble dans le même solvant que celui utilisé pour dissoudre le moule, de sorte que les dissolutions des noyaux (10), des éventuels inserts (20) et du moule ont lieu lors d'une même opération.

## Claims

1. A method of fabricating a turbine stator casing, said casing comprising a double-skinned shroud (105) with an inner skin, an outer skin and empty spaces (110) between such inner and outer skins, the method comprising the operations consisting in:
between the walls of portions (O1, O2, O3, E1, E2) of a mold comprising at least two portions, forming a cavity of shape corresponding to that of said shroud (105);
· securing cores (10) made of soluble material to at least one of said mold portions (E1) by tubular pegs (12), said cores being held spaced apart from the wall of said mold portion by said pegs (12) and representing said empty spaces (110) that are to be provided inside said shroud (105), each peg (12) having two ends (12a, 12b), one end (12b) being mounted in a housing (16) formed in one of said cores (10), and the other end (12a) being mounted in a housing (14) formed in said mold portion (E1), and each peg (12) presenting a through hole (18) opening out through said ends (12a, 12b);
· filling said cavity with a metal alloy powder (24);
· sintering said powder (24) by hot isostatic pressing;
· eliminating said cores (10) by using a solvent for dissolving them, said through holes (18) constituting access paths leading to the cores through which the solvent can pass; and
· extracting the shroud (105) as molded in this way.

2. A method according to claim 1, comprising the operations consisting in:
· placing inserts (20) between the cores (10) to represent flow paths (120) between said empty spaces (110); and
· eliminating the inserts (20) after the sintering operation.

3. A method according to claim 2, in which said inserts (20) are made of a soluble material, and said inserts (20) are eliminated by being dissolved.

4. A method according to any one of claims 1 to 3, in which said other end (12a) of at least one of said pegs (12) is suitable for co-operating with the end of a cooling air feed pipe.

5. A method according to any one of claims 1 to 4, in which the pegs (12) are secured to the shroud (105) by diffusion welding during sintering of the powder, the material of the pegs (12) and of the shroud (105) being compatible for diffusion-welding purposes.

6. A method according to any one of claims 1 to 5, in which said casing further comprises fastener hooks for supporting at least one turbine nozzle, and in which the shroud (105) is molded in such a manner as to provide projections on the inside face of the shroud facing towards the inside of the turbine, and said projections are machined so as to give them the shape (126) of said hooks.

7. A method according to any one of claims 1 to 5, in which said casing further comprises fastener hooks for supporting at least one turbine nozzle, and in which the hooks are fabricated prior to molding the shroud (105), and they are subsequently fastened to the inside face of the shroud facing towards the inside of the casing.

8. A method according to claim 7, in which the hooks are fastened to the shroud (105) by diffusion welding while the powder (24) is being sintered, the materials of the hooks and of the shroud (105) being compatible for diffusion-welding purposes.

9. A method according to any one of claims 1 to 8, in which the mold portions (O1, O2, O3, E1, E2) are made of a soluble material, and said mold portions are eliminated by dissolving them.

10. A method according to any one of claims 1 to 9, in which said soluble material is selected to be mild steel, and nitric acid is used as the solvent.

11. A method according to any one of claims 1 to 10, in which the cores (10) and possible inserts (20) are made of a material that is soluble in the same solvent as is used for dissolving the mold, such that the dissolving operations of the cores (10), of the possible inserts (20) and of the mold all take place as a single operation.

## Patentansprüche

1. Verfahren zur Herstellung eines Statorgehäuses einer Turbine, wobei das Gehäuse einen doppelhäutigen Mantel (105) mit einer Innenhaut, einer Außenhaut und Freiräumen (110) zwischen dieser Innenhaut und dieser Außenhaut aufweist, wobei dieses Verfahren die Schritte umfaßt, die darin bestehen:
- zwischen den Wänden der Teile (O1, O2, O3, E1, E2) einer von wenigstens zwei Teilen gebildeten Form einen Hohlraum auszubilden, dessen Form der Form des Mantels (105) entspricht,
- Kerne (10), die aus einem löslichen Material bestehen, unter Verwendung von röhrenförmigen Stiften (12) mit wenigstens einem der Formteile (E1) fest zu verbinden, wobei diese Kerne durch die Stifte (12) von der Wand des Formteils beabstandet gehalten werden und die Freiräume (110) bilden, die in dem Mantel (105) ausgebildet werden sollen, wobei jeder Stift (12) zwei Enden (12a, 12b) aufweist, wobei ein Ende (12b) in einer in einem der Kerne (10) ausgebildeten Aufnahme (16) angebracht ist und das andere Ende (12a) in einer in dem Formteil (E1) ausgebildeten Aufnahme (14) angebracht ist, und wobei jeder Stift (12) ein durchgehendes Loch (18) aufweist, das im Bereich der Enden (12a, 12b) ausmündet,
- den Hohlraum mit einem Pulver aus einer Metallegierung (24) zu füllen;
- dieses Pulver (24) durch isostatisches Warmpressen zu sintern,
- die Kerne (10) unter Verwendung eines Lösungsmittels für deren Auflösung zu entfernen, wobei die durchgehenden Löcher (18) Zugangswege zu den Kernen bilden, über die das Lösungsmittel hindurch gelangt, und
- den so geformten Mantel (105) herauszunehmen.

2. Verfahren nach Anspruch 1, das die Schritte umfaßt, die darin bestehen:
- zwischen den Kernen (10) Einsätze (20) anzuordnen, die Zirkulationswege (120) zwischen den Freiräumen (110) ausbilden, und
- diese Einsätze (20) nach dem Sinterschritt zu entfernen.

3. Verfahren nach Anspruch 2, bei dem die Einsätze (20) aus einem löslichen Material gefertigt werden und diese Einsätze (20) durch Auflösen entfernt werden.

4. Verfahren nach einem der Ansprüche 1 bis 3, bei dem das andere Ende (12a) von wenigstens einem der Stifte (12) geeignet ist, mit dem Ende einer Kühlluftversorgungsleitung zusammenzuwirken.

5. Verfahren nach einem der Ansprüche 1 bis 4, bei dem die Stifte (12) während des Sinterns des Pulvers durch Diffusionsschweißen mit dem Mantel (105) fest verbunden werden, wobei die Materialien der Stifte (12) und des Mantels (105) unter dem Gesichtspunkt des Diffusionsschweißens kompatibel sind.

6. Verfahren nach einem der Ansprüche 1 bis 5, bei dem das Gehäuse ferner Befestigungshaken zum Halten wenigstens eines Turbinenleitrades aufweist und bei dem der Mantel (105) so geformt wird, daß an der zur Innenseite der Turbine weisenden Innenfläche des Mantels Vorsprünge ausgebildet werden und diese Vorsprünge bearbeitet werden, um ihnen die Form (126) der Haken zu verleihen.

7. Verfahren nach einem der Ansprüche 1 bis 5, bei dem das Gehäuse ferner Befestigungshaken zum Halten wenigstens eines Turbinenleitrades umfaßt und bei dem diese Haken vor dem Formen des Mantels (105) hergestellt und anschließend an der zur Innenseite des Gehäuses weisenden Innenfläche des Mantels befestigt werden.

8. Verfahren nach Anspruch 7, bei dem die Haken während des Sinterns des Pulvers (24) durch Diffusionsschweißen fest mit dem Mantel (105) verbunden werden, wobei die Materialien der Haken und des Mantels (105) unter dem Gesichtspunkt des Diffusionsschweißens kompatibel sind.

9. Verfahren nach einem der Ansprüche 1 bis 8, bei dem die Formteile (01, 02, 03, E1, E2) aus löslichem Material gefertigt werden und diese Formteile durch Auflösen entfernt werden.

10. Verfahren nach einem der Ansprüche 1 bis 9, bei dem das lösliche Material aus Weichstahl ausgewählt wird und als Lösungsmittel Salpetersäure verwendet wird.

11. Verfahren nach einem der Ansprüche 1 bis 10, bei dem die Kerne (10) und die eventuellen Einsätze (20) aus einem Material bestehen, das in dem gleichen Lösungsmittel wie es zum Auflösen der Form verwendet wird, lösbar ist, so daß das Auflösen der Kerne (10), der eventuellen Einsätze (20) und der Form während eines gleichen Arbeitsschrittes stattfindet.
